# EUROPEAN PATENT APPLICATION

(11) **EP 1 209 574 A2**
(43) Date of publication of application: **29.05.2002**
(21) Application number: 01304845.9
(22) Date of filing: 01.06.2001
(51) Int. Cl.: G06F 13/40

(54) **USB computer memory drive**

(30) Priority: 24.11.2000 KR 2000055459; 25.04.2001 US 843162
(71) Applicant: Q-tek International, LLC, Tacoma, Washington 98424 (US)
(72) Inventor: Song, Kwon Sik, Tacoma, Washington 98424 (US); Lee, Kyu B., Tacoma, Washington 98422 (US)
(74) Representative: Spall, Christopher John

(57) **Abstract**

A flash memory device for connecting to a USB defined computer system for storing and transferring data therebetween, including: (a) at least one flash memory module (60) for storing data; (b) a USB connector (22) for connecting to the computer system; (c) a microcontroller (30) for controlling the sending and receiving of data to and from the D-MINUS contact and the D-PLUS contact, respectively of the USB connector; (d) a decoder (50) for decoding an input address from the computer system into a selected flash memory signal; and (e) an external ROM (40) for storing a firmware program for controlling the operation of the flash memory device.

## Description

### Field of the Invention

This invention generally relates to data storage devices and, more specifically, to flash memory devices for connection to USB (Universal Serial Bus) equipped computers.

### Background of the Invention

Data storage devices, such as hard disk drives, floppy disk drives, zip drives, CD drives, and click drives are commonplace and extensively used for storing data in computer systems. There are several drawbacks, however, that are associated with their use and connection to computer systems such as, for example, personal computers (PC) and laptops. One such drawback is that these drives are relatively large and heavy and contain a number of mechanical components inside. The relatively large size of these drives hinder laptops from being even smaller and more portable. Moreover, these drives are prone to failure if exposed to excessive shock and vibration or to dust or other atmospheric contaminants. Another drawback is that they require an external power source apart from the host computer system for operation. Yet another drawback is that these devices require a cable connection, different ports, jacks, and reconfiguration for connection to their host computer system and are not *plug and play* compatible.

Therefore, in light of the above problems, there is a need for a data storage device for connection to a computer system that is smaller, lighter, and contain fewer mechanical components than conventional drives. There is an additional need for a data storage device for connection to a computer system that is not prone to failure if exposed to excessive shock and vibration or to dust or other contaminants. There is a further need for a data storage device for connection to a computer system that does not require an external power source for operation. There is a further need for a data storage device for connection to a computer system that does not require a connection cable to the host computer system and allows the data storage device to be *plug and play* compatible with the computer system to allow for high speed data transfer.

### Summary of the Invention

The present invention provides a data storage device for connection to a computer system for the storing and transferring of data therebetween. The data stored in the data storage device can be transferred between a plurality of computer systems. According to one embodiment of the invention, the data storage device is smaller, lighter, and contain fewer mechanical components than conventional drives. Advantageously, the data storage device is not prone to failure if exposed to excessive shock, vibration, or contaminants. Further, the data storage device does not require an external power source for operation as does conventional drives. Further still, the data storage device requires no connection cable to a host computer system and is *plug and play* compatible with the computer system.

Generally described, the present invention is a flash memory device compatible with Universal Serial Bus (USB) equipped computers for the storing and transferring of data therebetween. Flash memory is a non-volatile storage medium that can be programmed by a user. Once programmed, the flash memory retains its data, even if the power is switched off, until erased by the user. The flash memory device of the present invention is suitable for plugging into any USB port supported on a personal or laptop computer. The USB standard is a peripheral device bus standard developed by members of the personal computer and telecommunications industry to provide plug and play of computer peripheral devices outside the personal computer itself. It provides for a single, universal, interface connector and eliminates the current need for different ports and different jacks. It also eliminates the need to install different cards into dedicated computer slots and reconfigure the system. Personal computers equipped with a USB port allow the flash memory device of the present invention to be automatically configured as soon as it is plugged into the computer's USB port. The automatic configuration setup would occur without the need to reboot or run a setup program.

The flash memory device of the present invention contains one or more flash memory modules, the flash memory device is adapted to be connected to a USB port supported on a host computer system for the storing and transferring of data therebetween. The flash memory device includes: (a) at least one flash memory module in which data is stored; (b) a USB connector for connecting to the USB defined host computer system, the USB connector having a D-PLUS contact for receiving data from the host computer system and for data storage to at least one flash memory module and a D-MINUS contact for sending data from at least one of the flash memory module to the host computer system; (c) a microcontroller for controlling the at least one flash memory module by controlling the sending and receiving of data to and from the D-MINUS contact and the D-PLUS contact, respectively; (d) a decoder for decoding an input address from the host computer system into a selected flash memory signal; and (e) an external ROM for storing a firmware program for controlling the operation of the flash memory device.

As mentioned previously, the present invention would be particularly useful for a number of reasons, including low cost, ease of use and transparency to the end user.

### Brief Description of the Drawings

The foregoing aspects and many of the attendant advantages of this invention will become more readily appreciated as the same become better understood by reference to the following detailed description, when taken in conjunction with the accompanying drawings, wherein:

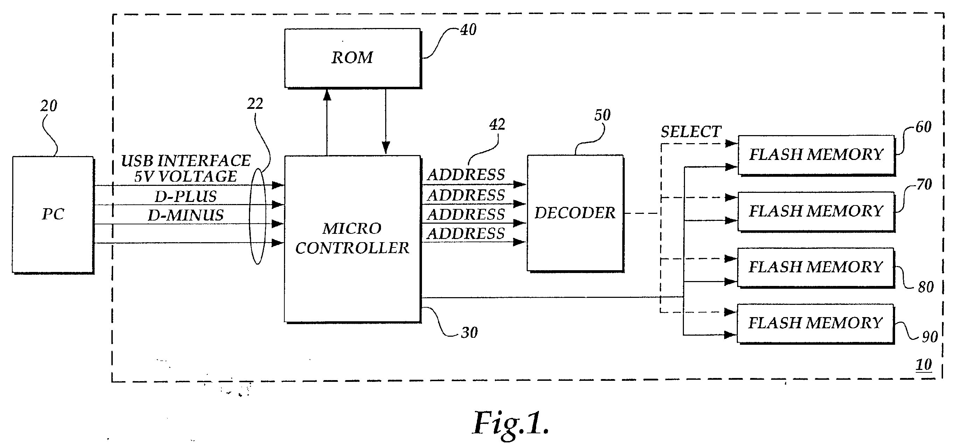

FIGURE 1 is a block diagram showing an illustrative architecture for a USB flash memory device.

### Detailed Description of the Preferred Embodiment

FIGURE 1 depicts several of the key components of a USB flash memory device 10. USB flash memory device 10 includes a USB connector 22, a microcontroller 30, external ROM (Read Only Memory) 40, decoder 50, and a multitude of flash memory modules 60, 70, 80, and 90. USB flash memory device 10 may be constructed to have a PCB (printed circuit board) containing the various components described above and a USB "A" connector. In this way, the USB flash memory device 10 can dispense with the need of a connection cable and allow for portability and be easily plugged into a host computer's USB port.

USB flash memory device 10 is shown connected to a personal computer (PC) 20 by way of USB connector 22. PC 20 operates USB flash memory device 10 as a non-volatile storage space and includes a USB controller (not shown) for controlling and managing all USB data and command transfers. PC 20 may include personal computers having an operating system such as DOS, Windows™, OS/2™ or Linux; Macintosh™ computers; computers having JAVA™ -OS as the operating system; and graphical workstations such as the computers of Sun Microsystems™ and Silicon Graphics™, and other computers having some version of the UNIX operating system such as AIX™ or SOLARIS™ of Sun Microsystems™; or any other known and available operating system, including operating systems such as Windows CE™ for embedded systems, including cellular telephones, handheld computational devices and palmtop computational devices, and any other computational devices that can be connected to a network. Whenever USB flash memory device 10 becomes connected to PC 20, a standard USB enumeration process takes place. In this process PC 20 configures USB flash memory device 10 and the mode of communication with USB flash memory device 10.

Referring to FIGURE 1, microcontroller 30 supports the USB functionality according to the USB standard as well as data reception and transmission over USB connector 22 to and from USB endpoints. Microcontroller 30 also supports the functionality and control of flash memory device 10, as well as the processing of command and data packets from PC 20. When PC 20 requests services from USB flash memory device 10, PC 20 sends request packets through USB connector 22 which are then received by microcontroller 30. Microcontroller 30 then performs various operations such as reading, writing or erasing data from or to flash memory module(s) 60-90, or supporting basic USB functionality such as device enumeration and configuration.

USB flash memory device 10 receives input data from PC 20 through USB interface 22. USB interface 22 has a D-PLUS contact for receiving data from PC 20 and for data storage to one of the flash memory modules 60-90. USB interface 22 also has a D-MINUS contact for sending data from one of the flash memory modules 60-90 to PC 20. Microcontroller 30 controls the receiving and sending of data through the D-PLUS and D-MINUS connectors, respectively. Next, decoder 50 decodes an input address 42 from PC 20 into a selected flash memory signal, selects one out of a plurality of flash memory modules 60-90, and microcontroller 30 sends and stores the input data on the selected flash memory module. Flash memory modules 60-90 may have the capacity to store more than 1 GB (gigabyte) of data. Flash memory modules 60-90 are also connected to microcontroller 30 for transferring commands for performing read, write or erase commands on flash memory modules 60-90.

External ROM 40 stores a firmware program for controlling the operation of USB flash memory device 10. It will be appreciated that the firmware program may be stored on a computer-readable medium and loaded into external ROM 40 of USB flash memory device 10 using a drive mechanism associated with the computer-readable medium, such as a floppy or CD-ROM drive. Once a driver program is installed in PC 20, an operating system, such as Windows, automatically recognizes USB flash memory device 10 as a removable hard disk drive and USB flash memory device 10 operates as a hard drive. Because PC 10 supplies power to USB flash memory device 10 through the USB interface, USB flash memory device 10 does not require an external source of power. Shown in FIGURE 1 is a USB interface which supplies 5 volts from PC 20 to microcontroller 30 for the operation of USB flash memory device 10.

USB flash memory device 10 may also include a write protection switch (not shown) in order to protect data stored therein.

While an illustrative embodiment of the invention has been illustrated and described, it will be appreciated that various changes can be made therein without departing from the spirit and scope of the invention.

## Claims

1. A USB flash memory device for connecting to a USB defined computer, the flash memory device comprising:
at least one flash memory module for storing data;
a USB connector for connecting to said computer, said USB connector having a first contact for receiving data from said computer to said at least one flash memory module and a second contact for sending data from said at least one flash memory module to said computer;
a microcontroller for controlling said at least one flash memory module by controlling the sending and receiving of data to and from said second contact and said first contact, respectively;
a decoder for decoding an input address from said computer into a selected flash memory signal, and;
an external ROM for storing a firmware program for controlling the operation of said USB flash memory device.
